# EUROPÄISCHE PATENTSCHRIFT

(11) **EP 0 333 094 B1**
(45) Veröffentlichungstag und Bekanntmachung des Hinweises auf die Patenterteilung: **11.08.1993**
(21) Anmeldenummer: 89104393.7
(22) Anmeldetag: 13.03.1989
(51) Int. Cl.: F16L 37/12, F16L 33/23, F16L 21/08

(54) **Lösbare Verbindungsvorrichtung für Rohre, Schläuche, Stangen oder dergleichen**
Detachable connecting device for pipes, hoses, rods, or the like
Dispositif de jonction détachable pour tuyaux, tuyaux flexibles, barres ou même sorte

(30) Priorität: 17.03.1988 DE 3809029; 30.12.1988 DE 3844421
(43) Veröffentlichungstag der Anmeldung: 20.09.1989
(73) Patentinhaber: Lacrex S.A., CH-6644 Orselina / TI (CH)
(72) Erfinder: Pasbrig, Max, CH-6644 Orselina (CH)

(56) Entgegenhaltungen:
- EP-A- 0 021 795
- EP-A- 0 146 997
- EP-A- 0 212 883
- AT-B- 379 223
- DE-A- 2 534 956
- DE-A- 2 631 650
- DE-A- 2 805 495
- DE-A- 3 025 427
- DE-A- 3 513 189

## Beschreibung

Die Erfindung betrifft eine lösbare Verbindungsvorrichtung für Rohre, Schläuche, Stangen o.dgl. in Form eines Gehäuserohrstücks mit einem Klemmstück nach dem Oberbegriff des Anspruchs 1 bzw. 14.

In der Hydraulik, beispielsweise bei der Steuerung von Robotern, besteht das Bedürfnis, Schläuche, Rohre o.dgl. miteinander oder mit Rohrstutzen schnell kuppeln und zum Zwecke des Umrüstens auch schnell wieder lösen zu können. Schnell lösbare Schlauchverbindungen werden nicht nur in der Hydraulik benötigt, sondern auch auf allen Gebieten, in denen Flüssigkeiten oder Gase in Schläuchen oder Rohren transportiert oder durch Schläuche oder Rohre geleitet werden.

Aus der EP-A-212 883 ist eine lösbare Verbindungsvorrichtung der eingangs angegebenen Art bekannt. Bei dieser Verbindungsvorrichtung kann es vorkommen, daß sich die Verbindung lockert oder in unerwünschter Weise selbständig löst.

Aus der DE-A-30 25 427 ist eine Verbindungsvorrichtung zur lösbaren Aufnahme eines Rohres bekannt, die ein eine Bohrung aufweisendes Formteil besitzt. In die Bohrung mündet eine Aufnahmeöffnung für ein Ende des Rohres, die ein zur Bohrung hin liegendes erstes Ende und ein zur Außenseite des Formteils hin offenliegendes zweites Ende aufweist. In der Aufnahmeöffnung liegt ein ringartiger Haltekörper, der mehrere sich axial erstreckende Finger umfaßt, die bei zwischen ihnen befindlichem Rohrende unter einer radial einwärts gerichteten Vorspannung stehen und das Rohrende gegen eine axiale Verschiebung aus der Aufnahmeöffnung festhalten. Ferner sind Entkupplungsmittel vorgesehen, die bei ihrer Betätigung eine radiale Verstellung dieser Finger soweit nach außen bewirken, daß die Finger außer Eingriff mit dem Rohrende kommen. Um eine Verbindungsvorrichtung zu schaffen, die von einfachem Aufbau ist, ein leichtes Kuppeln und Entkuppeln gestattet, eine auch bei hohen Innendrücken sichere Abdichtung bewirkt, ein Verkratzen der Außenseite des aufgenommenen Rohres weitgehend vermeidet sowie leicht montierbar und handhabbar ist, ist der Haltekörper von einem bei Blick in axialer Richtung entsprechend einem mehrseitigen Vieleck verlaufenden Bandabschnitt und an diesen anschließenden Fingern gebildet, so daß benachbarte Seiten des Bandabschnittes Außenecken miteinander bilden. Der Bandabschnitt ist derart bemessen, daß in seinem unbelasteten Zustand die Außenabmessungen einer gedachten, geschlossenen, durch die Außenecken verlaufenden, kreisförmigen Linie größer sind und die Außenabmessungen einer gedachten, geschlossenen, durch die Mitte seiner Seiten verlaufenden, kreisförmigen Linie geringer sind als der Innendurchmesser der Aufnahmeöffnung in deren zur Aufnahme des Bandabschnitts bestimmtem Längenabschnitt, so daß der Bandabschnitt in in dem genannten Längenabschnitt der Aufnahmeöffnung montierten Zustand hierin ausschließlich an seinen Außenecken gehalten werden kann.

Aufgabe der Erfindung ist es, eine lösbare Verbindungsvorrichtung für Rohre, Schläuche, Stangen oder dergleichen in Form eines Gehäuserohrstücks mit einem Klemmstück nach dem Oberbegriff des Anspruchs 1 zu schaffen, bei der ein unerwünschtes selbständiges Lösen oder eine Lockerung der Verbindung ausgeschlossen sind.

Erfindungsgemäß wird diese Aufgabe nach den kennzeichnenden Merkmalen des Anspruchs 1 dadurch gelöst, daß das Betätigungsstück an einer Seite mit einer die federnden Zungen umgebenden Ringnut versehen ist, in die ein Ende des zylindrischen Gehäuserohrstücks einschiebbar ist und die federnde Elemente eingelegt sind, die das Gehäuserohrstück in Ausschubrichtung beaufschlagen. Die in die Ringnut eingelegten federnden Elemente trachten, das in die Ringnut eingeschobene zylindrische Ende des Gehäuserohrstücks herauszuschieben, so daß die Verbindung in ihrer Klemmstellung gehalten wird.

Wenn auf das Schlauchstück ein Zug ausgeübt wird, durch den dieses aus der Schlauchkupplung herausgerissen werden könnte, wird dieser Zug kraftschlüssig auf das Klemmrohrstück übertragen, so daß durch eine Bewegung des Klemmrohrstücks nach außen die auf dem sich konusförmig verengenden Endteil des verbreiterten Abschnitts gleitenden Segmente des wulstförmigen Randes nach innen gedrückt werden und dadurch die federnden Zungen stärker gegen den Schlauchmantel andrücken. Auf diese Weise führt jeder auf den angeschlossenen Schlauch ausgeübte Zug zu einer stärkeren Verspannung und damit festeren Schlauchverbindung. Der endseitige wulstförmige Rand des Klemmrohrstücks ist in dem verbreiterten Abschnitt mit axialem Spiel, also begrenzt axial verschieblich gehaltert, so daß sich die Schlauchverbindung einfach und schnell dadurch lösen läßt, daß das Klemmrohrstück in das Gehäuserohrstück hinein verschoben und gleichzeitig das Schlauchstück aus der Schlauchkupplung herausgezogen wird. Durch das Einwärtsschieben des Klemmrohrstücks löst sich der wulstförmige Rand von den durch den konusförmigen Teil gebildeten Keilflächen, so daß die Zungen nur noch unter ihrer eigenen federnden Spannung an dem Mantel des Schlauches anliegen und dieser nach Überwindung nur geringer Reibungskräfte aus der Schlauchkupplung herausgezogen werden kann.

Das Betätigungsteil läßt sich zum Lösen der Schlauchkupplung bequem in das Innere des Gehäuserohrstücks hineinschieben, so daß sich die Segmente des wulstförmigen Randes der federnden Zungen von den konusförmigen Keilflächen entfernen.

Gemäß Anspruch 14 werden die Zungen durch eine Betätigungshülse gelöst.

Vorteilhafte Weiterbildungen sind in den Unteransprüchen beschrieben.

Die federnden Zungen können an ihren freien Enden und/oder im Bereich des ringwulstförmigen Randes auf ihren zylinderschalenförmigen Innenseiten mit schneidenartigen Vorsprüngen versehen sein. Diese Vorsprünge schneiden sich bei dem Ausüben eines Zuges auf den Schlauch in den Schlauchmantel ein und erhöhen dadurch die Klemmkraft. Die schneidenartigen Vorsprünge können aus in Umfangsrichtung verlaufenden rippenartigen Teilen bestehen. Sie können auch aus Klingen bestehen, die in entsprechende Nuten auf den Innenseiten der federnden Zungen eingesetzt sind.

Zweckmäßigerweise verjüngt sich der wulstförmige Rand zu seinem äußeren Ende hin konusförmig. Diese konusförmige Verjüngung ermöglicht ein leichteres Einführen des Klemmrohrstücks in das Gehäuserohrstück. Das Klemmrohrstück braucht nur in das Gehäuserohrstück hineingedrückt zu werden, bis die Segmente des ringwulstförmigen Randes verriegelnd in den verbreiterten Gehäuseabschnitt einschnappen.

Nach einer vorteilhaften Ausgestaltung ist vorgesehen, daß das Gehäuserohrstück mit einem den verbreiterten Abschnitt durchsetzenden zentralen Rohrfortsatz versehen ist, auf den der anzuschließende Schlauch aufschiebbar ist. Diese Ausgestaltung ist insbesondere dann vorteilhaft, wenn der anzuschließende Schlauch einen Mantel aus flexiblem Material besitzt. Durch Aufschieben des Schlauches auf das im Inneren des Gehäuserohrstücks befindliche dornartige Rohrstück wird das Schlauchende gestützt, so daß es zwischen diesem dornartigen Rohrfortsatz und den federnden Zungen fest eingespannt wird. Der Rohrfortsatz bildet also ein Widerlager für die den Klemmdruck ausübenden federnden Zungen.

Zweckmäßigerweise schließt an den verbreiterten Abschnitt des Durchtrittskanals des Gehäuserohrstücks nach innen hin über eine Stufe ein in seinem Durchmesser dem Schlauchdurchmesser entsprechender Kanalabschnitt an. Das Schlauchstück wird sodann bis in diesen Kanalabschnitt vorgeschoben, so daß dessen Halterung und Führung in der Schlauchkupplung verbessert ist.

Nach einer Weiterentwicklung ist vorgesehen, daß in den verbreiterten Abschnitt des Durchtrittskanals des Gehäuserohrstücks ein O-Ring gehaltert ist. Dieser legt sich dichtend auf den äußeren Mantel des Schlauches und verbessert dadurch die Dichtigkeit der Verbindung.

Nach einer anderen Ausführungsform ist vorgesehen, daß sich der gegenüber dem in seinem Durchmesser verbreiterten Abschnitt des Gehäuserohrstücks in seinem Durchmesser verengte Austrittsquerschnitt nach außen hin konusförmig erweitert. Durch diese trichterförmige Erweiterung läßt sich das Klemmrohrstück mit seinen federnden Zungen auch dann einfach in das Gehäuserohrstück hineindrücken, wenn die Segmente des wulstförmigen Randes der federnden Zungen nicht konusförmig abgeschrägt sind.

Die beiden Enden des Gehäuserohrstücks können spiegelbildlich mit in erweiterten ringförmigen Kammern gehalterten Klemmstücken versehen sein. Eine derart ausgebildete Schlauchkupplung ermöglicht die Verbindung zweier Schlauchenden.

Nach einer weiteren Ausführungsform ist vorgesehen, daß eine Seite des Gehäuserohrstücks mit einem rohrförmigen Fortsatz versehen ist, der auf seiner äußeren Mantelfläche Halteprofile für einen aufgeschobenen Schlauch aufweist.

Die Erfindung betrifft ferner eine lösbare Verbindungsvorrichtung für Rohre, Schläuche, Stangen oder dergleichen in Form eines Gehäuserohrstücks mit einem Klemmstück nach Anspruch 14.

Die Erfindung wird nachstehend anhand der Zeichnung näher erläutert, wobei die Figuren 1 bis 3 kein Ausführungsbeispiel der Erfindung gemäß den unabhängigen Ansprüchen zeigen und nur zur Erläuterung von Merkmalen abhängiger Ansprüche dienen. In der Zeichnung. zeigt
- Fig. 1: einen Längsschnitt durch eine erste Ausführungsform einer Schlauchkupplung zum Verbinden zweier Schlauchebenen,
- Fig. 2: den oberen linken Teil des Schnitts der Fig. 1 in vergrößerter Darstellung,
- Fig. 3: einen Längsschnitt durch eine zweite Ausführungsform einer Schlauchkupplung,
- Fig. 4: einen Längsschnitt durch eine dritte Ausführungsform einer Schlauchkupplung zum Verbinden zweier Schlauchebenen,
- Fig. 5: den linken oberen Teil des Schnitts nach Fig. 4 in vergrößerter Darstellung,
- Fig. 6: eine vierte Ausführungsform einer Schlauchkupplung und
- Fig. 7: eine fünfte Ausführungsform einer Schlauchkupplung

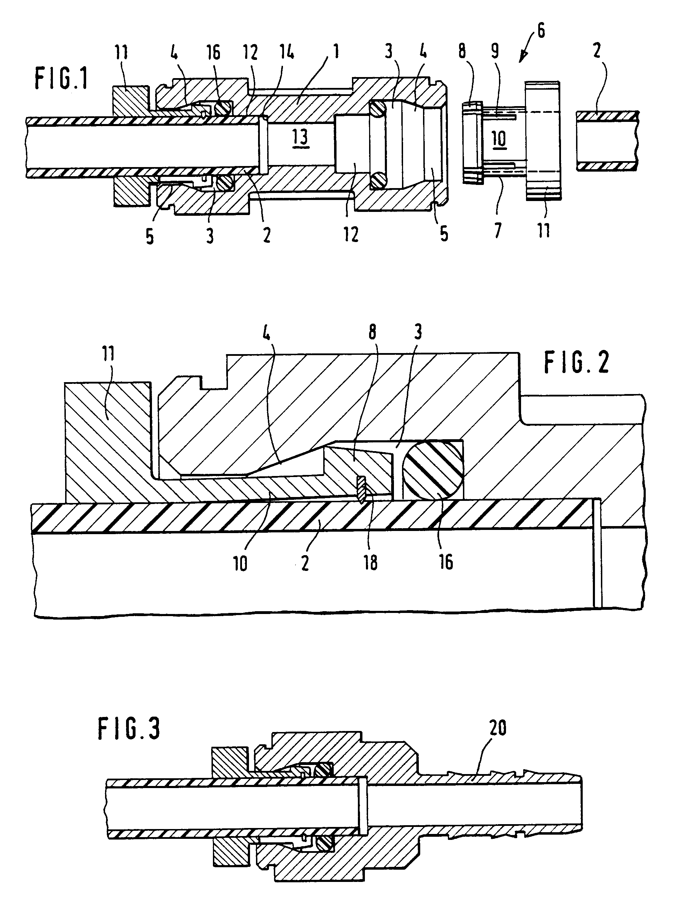

Die in Fig. 1 dargestellte Schlauchkupplung besteht aus einem gehäuseartigen Rohrstück 1, das an seinen beiden Enden mit Kupplungsstücken zum Ankuppeln von Schlauchenden 2 versehen ist. Jedes Kupplungsstück besteht aus einem im Durchmesser verbreiterten Abschnitt 3 des Gehäuserohrstücks 1. An jeden im Durchmesser verbreiterten Abschnitt schließt sich zu dem jeweiligen Ende des Gehäuserohrstücks hin ein Kanalabschnitt 4 an, der sich zu dem jeweiligen Ende hin konusartig verjüngt. An den Abschnitt 4 schließt sich ein den Austritt bildender Abschnitt 5 mit zylindrischer Bohrung an. In die endseitig Kupplungsteile des Gehäuserohrstücks 1 sind jeweils Klemmrohrstücke 6 eingeschoben. Diese bestehen aus einem dünnwandigen Rohrabschnitt 7, der endseitig einen wulstförmigen über die äußere Mantelfläche umlaufenden verbreiterten Rand 8 trägt. An dem gegenüberliegenden Ende ist das Klemmrohrstück 6 mit einem ringförmig verbreitertem Betätigungsstück 11 versehen. Das Klemmrohrstück 6 ist mit längs Mantellinien verlaufenden und den wulstförmigen Rand 8 frei durchsetzenden Schlitzen 9 versehen, die in der aus Fig.1 ersichtlichen Weise federnde Zungen 10 abteilen.

Das Klemmrohrstück 6 ist in der aus Fig.1 ersichtlichen Weise in das Gehäuserohrstück so weit eingeschoben, daß der wulstförmige Rand 8 in dem Grenzbereich zwischen dem verbreiterten zylindrischen Abschnitt 3 und dem anschließenden konusförmigen Abschnitt 4 liegt.

Das Klemmrohrstück 6 ist mit einem zylindrischen Durchtrittskanal versehen, dessen Durchmesser dem äußeren Durchmesser des Schlauches 2 entspricht.

An den im Durchmesser verbreiterten Abschnitt 3 schließt sich über eine ringförmige Stufe ein zylindrischer Abschnitt 12 an, dessen Durchmesser wiederum dem Außendurchmesser des Schlauches 2 entspricht. In seinem mittleren Bereich ist das Gehäuserohrstück 6 mit einem Kanalabschnitt 13 versehen, dessen Durchmesser grundsätzlich dem Innendurchmesser des Schlauches 2 entspricht. Zwischen den Abschnitten 12 und 13 ist eine Ringstufe 14 gebildet, die als Anschlag für das Ende des eingeschobenen Schlauches dienen kann.

In die durch den verbreiterten Kanalabschnitt 3 gebildete ringförmige Kammer ist in der aus Fig. 1 ersichtlichen Weise ein O-Ring 16 eingelegt, der das Gehäuserohrstück 1 gegenüber dem Schlauch 2 abdichtet.

Der Durchmesser des Rohrabschnitts 7 zwischen dem wulstförmigen Rand 8 und dem ringförmigen Betätigungsstück 11 entspricht dem Innendurchmesser des Kanalabschnitts 5 im Austrittsbereich des Gehäuserohrstücks 1. Die Länge des Rohrabschnitts 7 des Klemmrohrstücks 6 ist so groß, daß sich der wulstförmige Rand 8 im Bereich des zylindrischen verbreiterten Abschnitts 3 des Durchtrittskanals in seiner von dem konusförmigen Abschnitt 4 vollständig abgeschobenen Stellung befindet, wenn der Betätigungsring 11 in Anlage an die Stirnseite des Gehäuserohrstücks 1 verschoben ist.

Die durch die Schlitze 9 gebildeten federnden Zungen 10 sind auf ihren zylinderschalenförmigen Innenseiten mit in Umfangsrichtung verlaufenden Nuten versehen, in denen schneidenartige Klingen 18 gehaltert sind. Die federnden Zungen 10 stützen sich über diese Klingen 18 auf dem Mantel des zu verbindenden Schlauches ab und sind leicht federnd gegen diesen angedrückt.

Der endseitige wulstförmige Rand 8 des Klemmrohrstücks 6 ist zu seinem freien Ende hin konusförmig abgeschrägt, so daß das Klemmrohrstück mit zusammengedrückten federnden Zungen durch den Kanalabschnitt 5 hindurch in das Gehäuserohrstück 1 hineingedrückt werden kann.

Das Gehäuserohrstück 1 sowie das Klemmrohrstück 6 bestehen aus Kunststoffspritzgußteilen. Sie können aber auch aus Metall gefertigt werden.

Bei dem Ausführungsbeispiel nach Fig .3 ist nur eine Seite des Gehäuserohrstücks mit einem Kupplungsstück der anhand der Fig. 1 und 2 beschriebenen Art versehen. Das gegenüberliegende Ende des Gehäuserohrstücks ist mit einem rohrförmigen Fortsatz 20 versehen, dessen äußerer Mantel mit einem Halteprofil für einen aufgeschobenen Schlauch versehen ist.

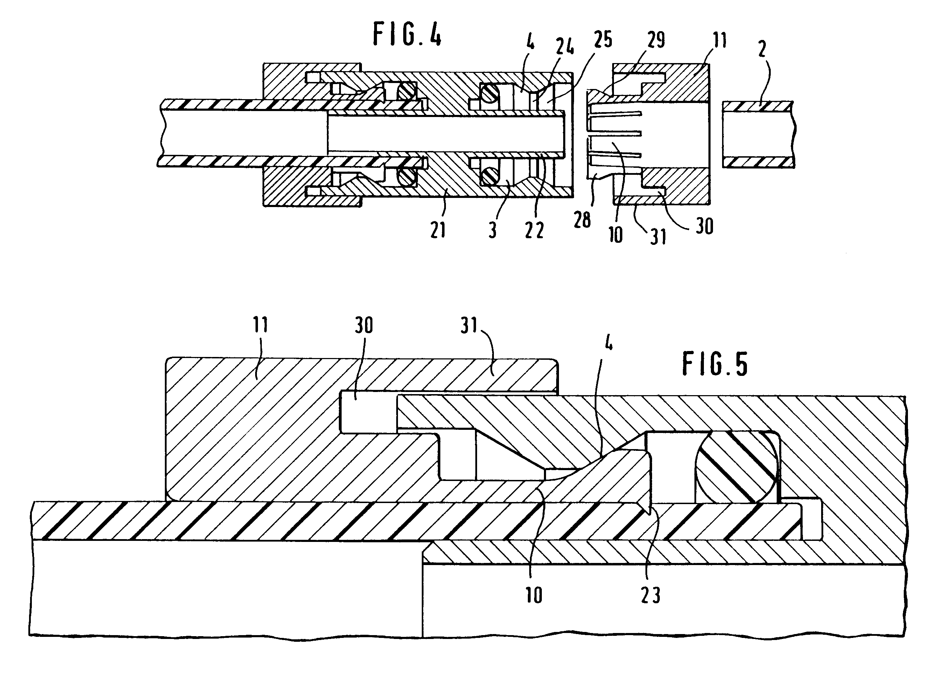

Die Ausführungsform eines Kupplungsstücks nach den Fig. 4 und 5 unterscheidet sich von der Ausführungsform nach den Fig. 1 und 2 grundsätzlich nur dadurch, daß das Gehäuserohrstück 21 mit die im Durchmesser verbreiterten Kammern 3 sowie die angrenzenden konusförmigen Abschnitte 4 durchsetzenden Rohrfortsätzen 22 versehen ist, die im Bereich der Enden des Gehäuserohrstücks 21 enden. Der Außendurchmesser dieser Rohrfortsätze 22 entspricht dem Innendurchmesser des anzuschließenden Schlauches 2. Die zentralen Rohrfortsätze 22 bilden daher Widerlagerflächen, gegen die die federnden Zungen 10 des Klemmrohrstücks den festzuklemmenden Schlauchabschnitt andrücken.

Weiterhin sind nach dem Ausführungsbeispiel der Fig. 4 und 5 die federnden Zungen 10 endseitig mit nach innen ragenden ringschneidenförmigen Segmenten 23 versehen, die einstückig mit den federnden Zungen 10 sind.

Das Gehäuserohrstück 21 ist im Anschluß an den konusförmigen Abschnitt 4 mit einem Abschnitt 24 mit zylindrischer Bohrung versehen, an den ein sich nach außen hin konusförmig erweiternder Abschnitt 25 anschließt. Die endseitigen ringwulstartigen Segmente 28 der federnden Zungen 10 können auf diese Weise problemlos in das Gehäuserohrstück 21 eingeschoben werden, ohne mit konusartigen Schrägen versehen zu sein. Stattdessen weisen die ringwulstförmigen Segmente 28 auf ihren Rückseiten konusförmige Schrägen 29 auf, die im eingeschobenen Zustand mit dem konusförmigen Gehäuseteil 4 zusammenwirken. Bei dem Ausführungsbeispiel nach den Fig. 4 und 5 weist das Betätigungsstück 11 auf seiner dem Gehäuserohrstück 21 zugewandten Seite eine Ringnut 30 auf. Die die äußere Ringnut begrenzende zylindrische Wandung 31 des Betätigungsstücks 11 ist verlängert, so daß sie im gekuppelten Zustand das Gehäuserohrstück 31 übergreift. In der Ringnut 30 können nicht dargestellte federnde Elemente angeordnet werden, die das in die Ringnut eingeschobene zylindrische Ende des Gehäuserohrstücks herauszuschieben trachten, so daß die Verbindung in ihrer Klemmstellung gehalten wird. Dies ist insbesondere dann erforderlich. wenn die Verbindungsvorrichtung in Fahrzeugen, Robotern oder Vibrationen erzeugenden Maschinen verwendet wird, so daß ein unerwünschtes selbständiges Lösen oder eine Lockerung der Verbindung ausgeschlossen ist.

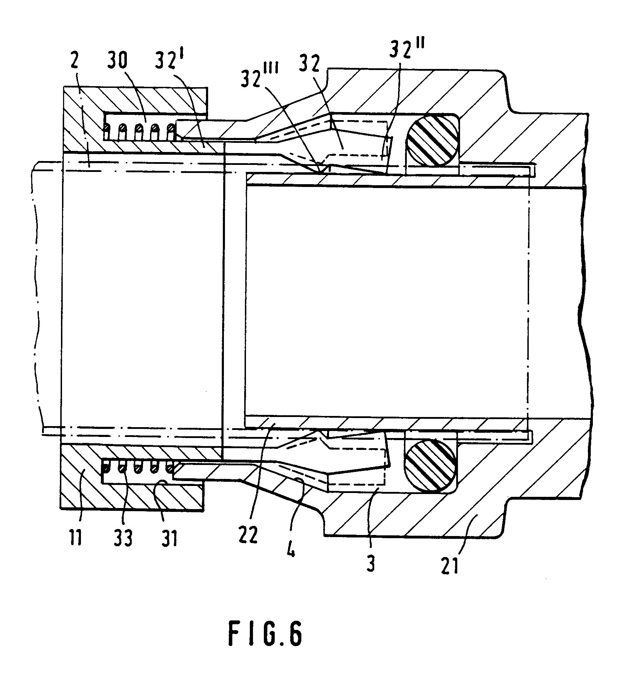

Die Ausführung nach Fig. 6 weist ein Betätigungsstück 11 mit einer Ringnut 30 auf, in der federnde Elemente 33 so angeordnet sind, daß das Betätigungsstück 11 in der Klemmstellung gehalten wird. Das Betätigungsstück 11 trägt Klemmstücke 32, die aus einem langen dünnen Teil 32′ und einem kurzen dickeren Teil 32˝ mit nasenförmigen Vorsprüngen 32‴ bestehen, die in der verbreiterten Kammer 3 mit dem konusförmigen Abschnitt 4 des Gehäuserohrstücks 21 federnd so angeordnet sind, daß das Teil 32′ mit dem konusförmigen Abschnitt 4 zusammenwirken kann. Aufgrund der federnd wirkenden Klemmstücke können Schläuche, Rohre o.dgl. problemlos in das Gehäuserohrstück 21 eingeschoben und am Rohrfortsatz 22 festgeklemmt werden. Wird auf das Betätigungsstück 11 gedrückt und dieses in das Innere des Gehäuserohrstücks 21 hineingeschoben, so wird der verdickte Teil 32˝ vom konusförmigen Abschnitt 4 in die erweiterte Kammer 3 geschoben und die Vorsprünge 32‴ der Klemmstücke 32, können sich aufgrund des federnd wirkenden verdünnten Teiles 32′, aus der Klemmstellung entfernen.

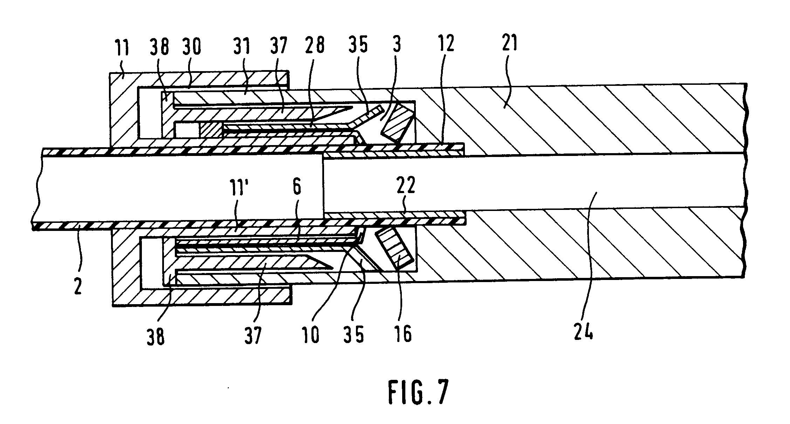

Die Ausführungsform nach Fig. 7 weist ein Gehäuserohrstück 21 mit zylindrischer Kammer 3 auf. In einem ringförmigen Einsatzstück 37 mit Rand 38 ist ein mit Schlitzen durchsetztes Ringteil 28 mit an die Wandung der Kammer 3 gerichteten Abkröpfungen 35 und ein Klemmrohrstück 6 mit in Richtung des Rohrfortsatzes 22 gerichteten federnden Zungen 10 sowie die Hülse 11′ des Betätigungsteils 11 verschieblich angeordnet. Die Hülse 11′ ist mit einem Durchtrittskanal für das Rohr, Schlauch 2 o. dgl. versehen.

Wird die Hülse 11′ gegen die Zungen gedrückt so werden die Zungen 10 aus der auf den Schlauch 2 drückenden Stellung bewegt. Bei diesem Vorgang wirken die Abkröpfungen 35 des Ringteils 28 federnd nachgebend und erleichtern das Lösen der Zungen 10 aus der Klemmverbindung.

Wie in Fig. 4, 5, 6 und 7 dargestellt und ersichtlich, wird durch den zentralen Rohrfortsatz 22 in Verbindung mit dem Schlauch 2, dem Kanalabschnitt 12 und dem Dichtring 16, ein Labyrinthdichtungssystem geschaffen. Dieses System bewirkt einen Druckabbau des bei einem Rückstau des duchfliessenden Mediums entstehenden Druckes auf die Dichtungen 16 und die Umleitung des Mediums entlang zwischen dem Rohrfortsatz 22 und dem darauf aufgeschobenen Schlauch 2 bis zum Ende des Kanalansatzes 12 und von da zwischen der Wand 12 und der Schlauchaußenwand bis zum Dichtring 16.

Die Erfindung ist nicht auf das dargestellte Ausführungsbeispiel beschränkt. Die erfindungsgemäße Verbindungsvorrichtung kann auch als Anschlußstück an Geräten, Bremstrommeln bei Fahrzeugen, Pumpen, Flüssigkeitsbehältern sowie bei Baustählen und Armierungseisen als Verbindung zur Anwendung kommen, wobei sie jeweils der Form derselben angepaßt ist. Auch der Stutzen 20 ist nicht nur zum Aufschieben von Schläuchen, sondern auch zur Verbindung mit diesen vorgesehen.

## Patentansprüche

1. Lösbare Verbindungsvorrichtung für Rohre, Schläuche, Stangen oder dergleichen in Form eines Gehäuserohrstücks mit einem Klemmstück, bei der der Durchtrittskanal des Gehäuserohrstücks (1, 21) mindestens in einem Endbereich einen in seinem Durchmesser verbreiterten Abschnitt (3) aufweist, der sich zum Austrittsquerschnitt (5) des Kanals hin konusförmig verjüngt und in dem ein Dichtmittel gehaltert ist,
bei der das Klemmstück aus einem Klemmrohrstück (6) besteht, das in das Gehäuserohrstück (1, 21) bis in den verbreiterten Abschnitt (3) einschiebbar und in diesem mit axialem Spiel durch einen verbreiterten endseitigen ringwulstförmigen Rand (8, 28) gehalten ist, dessen Außendurchmesser kleiner als der Innendurchmesser des verbreiterten Abschnitts (3), aber größer als der Austrittsquerschnitt (5) des Durchtrittskanals ist, das einen an den ringwulstförmigen Rand (8, 28) anschließenden Rohrabschnitt (7) aufweist, dessen Außendurchmesser dem Durchmesser des Austrittsquerschnitts (5) des Gehäuserohrstücks (1, 21) entspricht und das im Abstand von seiner Stirnseite ein ringartig verbreitertes Betätigungsteil (11) aufweist,
und bei der der Endbereich des Klemmrohrstücks (6) mit dem verbreiterten Rand (8, 28) mit mehreren, den Mantel durchsetzenden Längsschlitzen (9) versehen ist, die von dem Klemmrohrstück (6) federnde Zungen abteilen,
**dadurch gekennzeichnet**,
daß das Betätigungsstück (11) an einer Seite mit einer die federnden Zungen (10) umgebenden Ringnut (30) versehen ist, in die ein Ende des zylindrischen Gehäuserohrstücks (21) einschiebbar ist und in die federnde Elemente eingelegt sind, die das Gehäuserohrstück (21) in Ausschubrichtung beaufschlagen.

2. Verbindungsvorrichtung nach Anspruch 1, dadurch gekennzeichnet, daß die federnden Zungen (10) an ihren freien Enden und/oder im Bereich des ringwulstförmigen Randes (8) auf ihren zylinderschalenförmigen Innenseiten mit schneidenartigen Vorsprüngen (18,23) versehen sind.

3. Verbindungsvorrichtung nach Anspruch 2, dadurch gekennzeichnet, daß die schneidenartigen Vorsprünge aus in Umfangsrichtung verlaufenden rippenartigen Teilen bestehen.

4. Verbindungsvorrichtung nach Anspruch 3 oder 4, dadurch gekennzeichnet, daß die schneidenartigen Vorsprünge aus in Nuten eingesetzten Klingen (18) bestehen.

5. Verbindungsvorrichtun nach einem der Ansprüche 1 bis 4, dadurch gekennzeichnet, daß sich der wulstförmige Rand (8) zu seinem äußeren Ende hin konusförmig verjüngt.

6. Verbindungsvorrichtung nach einem der vorhergehenden Ansprüche, dadurch gekennzeichnet, daß das Gehäuserohrstück (21) mit einem den verbreiterten Abschnitt (3, 4) durchsetzenden zentralen Rohrfortsatz (22) versehen ist, auf den der anzuschließende Schlauch (2) aufschiebbar ist.

7. Verbindungsvorrichtung nach einem der vorhergehenden Ansprüche, dadurch gekennzeichnet, daß an den verbreiterten Abschnitt (3) des Durchtrittskanals des Gehäuserohrstücks (1) nach innen hin über eine Stufe ein in seinem Durchmesser dem Schlauchdurchmesser entsprechender Kanalabschnitt (12) anschließt.

8. Verbindungsvorrichtung nach einem der vorhergehenden Ansprüche, dadurch gekennzeichnet, daß in den verbreiterten Abschnitt (3) des Durchtrittskanals des Gehäuserohrstücks (1,21) ein O-Ring (16) gehaltert ist.

9. Verbindungsvorrichtung nach einem der vorhergehenden Ansprüche, dadurch gekennzeichnet, daß sich der gegenüber dem in seinem Durchmesser verbreiterten Abschnitt (3,4) des Gehäuserohrstücks (21) in seinem Durchmesser verengte Austrittsabschnitt nach außen hin konusförmig erweitert.

10. Verbindungsvorrichtung nach einem der vorhergehenden Ansprüche, dadurch gekennzeichnet, daß beide Enden des Gehäuserohrstücks (1,21) spiegelbildlich mit in erweiterten ringförmigen Kammern gehalterten Klemmrohrstücken versehen sind.

11. Verbindungsvorrichtung nach einem der vorhergehenden Ansprüche, dadurch gekennzeichnet, daß eine Seite des Gehäuserohrstücks mit einem rohrförmigen Fortsatz (20) versehen ist, der auf seiner äußeren Mantelfläche Halteprofile für einen aufgeschobenen Schlauch aufweist.

12. Verbindungsvorrichtung nach einem der vorhergehenden Ansprüche, dadurch gekennzeichnet, daß die die Ringnut (30) begrenzende äußere zylindrische Wandung (31) das Gehäuserohrstück (21) im gekuppelten Zustand endseitig teleskopartig übergreift.

13. Verbindungsvorrichtung nach einem der vorhergehenden Ansprüche, dadurch gekennzeichnet, daß das Klemmstück 32 einen langen dünnen Teil 32' und einen kurzen dickeren Teil 32'' mit nasenförmigen Vorsprüngen 32''' aufweist.

14. Lösbare Verbindungsvorrichtung für Rohre, Schläuche, Stangen oder dergleichen in Form eines Gehäuserohrstücks mit einem Klemmstück, bei der der Durchtrittskanal des Gehäuserohrstücks (21) mindestens in einem Endbereich einen in seinem Durchmesser verbreiterten Abschnitt (3) aufweist, der sich zum Austrittsquerschnitt (5) des Kanals hin konusförmig verjüngt und in dem ein Dichtmittel gehaltert ist, bei der das Klemmstück aus einem Klemmrohrstück (6) besteht, das in das Gehäuserohrstück (21) bis in den verbreiterten Abschnitt (3) einschiebbar und in diesem mit axialem Spiel gehalten ist, und bei der der Endbereich des Klemmrohrstücks (6) mit mehreren, den Mantel durchsetzenden Längsschlitzen versehen ist, die von dem Klemmrohrstück (6) federnde Zungen (10) abteilen,
dadurch gekennzeichnet,
daß im Bereich eines in den verbreiterten Abschnitt (3) eingesetzten Einsatzstückes (37) ein Ringteil (28) mit Abkröpfungen (35) angeordnet ist und eine mit einem Durchtrittskanal versehene Betätigungshülse (11') zum Lösen der Zungen (10) verschieblich gehaltert ist.

## Claims

1. Detachable connecting device for pipes, hoses, rods or the like in the form of a tubular casing with a clamping element,
in which the flow channel of the tubular casing (1, 21) features at least in one end area a section (3) which widens in its diameter, said section (3) tapering conically towards the outlet cross section (5) of the channel, and in which section (3) a sealing means is retained,
in which the clamping element consists of a tubular clamping device (6) which can be inserted into the tubular casing (1, 21) up to the widened section (3), and is retained in this section (3) with axial clearance by a widened end-face rim (8, 28) of annular bead shape, the outside diameter of which is smaller than the inside diameter of the widened section (3), but greater than the outlet cross section (5) of the flow channel, which features a tubular section (7) adjoining the annular bead rim (8, 28), the outside diameter of which tubular section (7) corresponds to the diameter of the outlet cross section (5) of the tubular casing (1, 21), and which features at a distance from its end face an actuating element (11) of widened annular shape,
and in which the end area of the tubular clamping device (6) with the widened rim (8, 28) is provided with several longitudinal slots (9) passing through the shell, which separate off spring-action tongues from the tubular clamping device (6)
**characterised in that**
the actuating element (11) is provided at one end with an annular groove (30) surrounding the spring-action tongues (10) into which annular groove (30) one end of the cylindrical tubular casing (21) can be inserted, and in which spring-action elements are located which apply pressure to the tubular casing (21) in the push-out direction.

2. Connecting device according to Claim 1, characterised in that the spring-action tongues (10) are provided with sharp-edged projections (18, 23) at their free ends and/or in the area of the annular bead-shaped rim (8) on their cylindrical shell-shaped inside surfaces.

3. Connecting device according to Claim 2, characterised in that the sharp-edged projections consist of rib-like parts running in the circumferential direction.

4. Connecting device according to claim 3 or 4, characterised in that the sharp-edged projections consist of blades (18) inserted in grooves.

5. Connecting device according to one of claims 1 to 4, characterised in that the bead-shaped rim (8) tapers conically towards its outer end.

6. Connecting device according to one of the preceding claims, characterised in that the tubular casing (21) is provided with a tubular continuation (22) passing through the widened section (3, 4), on which tubular continuation (22) the hose (2) to be connected can be push-mounted.

7. Connecting device according to one of the preceding claims, characterised in that, at the widened section (3) of the flow channel of the tubular casing (1), there is an adjoining channel section (12) which features a diameter reduced in one step to the hose diameter.

8. Connecting device according to one of the preceding claims, characterised in that an O-ring (16) is located and retained in the widened section (3) of the flow channel of the tubular casing (1, 21).

9. Connecting device according to one of the preceding claims, characterised in that the outlet section with the reduced diameter opposite the section (3, 4) with the widened diameter of the tubular casing (21) extends conically towards the outside.

10. Connecting device according to one of the preceding claims, characterised in that both ends of the tubular casing (1, 21) are provided with tubular clamping devices located in a mirror arrangement in extended annular chambers.

11. Connecting device according to one of the preceding claims, characterised in that one end of the tubular casing is provided with a tubular continuation (20) which features on its outer cylindrical surface retaining profiles for a push-mounted hose.

12. Connecting device according to one of the preceding claims, characterised in that, in the coupled condition, the outer cylindrical wall (31) bounding the annular groove (30) engages over the tubular casing (21) at one end in the fashion of a telescope.

13. Connecting device according to one of the preceding claims, characterised in that the clamping element 32 features a long thin part 32' and a short thick part 32'' with nose-shaped projections 32'''.

14. Detachable connecting device for pipes, hoses, rods or the like in the form of a tubular casing with a clamping element, in which connecting device the flow channel of the tubular casing (21) features at least in one end area a section (3) which widens in its diameter, said section (3) tapering conically towards the outlet cross section (5) of the channel, and in which section (3) a sealing means is retained, in which connecting device the clamping element consists of a tubular clamping device (6) which can be inserted into the tubular casing (21) up to the widened section (3), and is retained in this section (3) with axial clearance, and in which connecting device the end area of the tubular clamping device (6) is provided with several longitudinal slots passing through the shell, which separate off spring-action tongues (10) from the tubular clamping device (6)
characterised in that
in the area of an insertion piece (37) located in the widened section (3) is arranged an annular part (28) with flared ends (35), and an actuation sleeve (11') provided with a flow channel is retained as an axially shifting element for releasing the tongues (10).

## Revendications

1. Dispositif de jonction détachable pour tuyaux, tuyaux flexibles, barres ou pièces semblables sous forme d'un boîtier tubulaire avec une pièce de serrage,
le canal de passage du boîtier tubulaire (1, 21) présentant au moins dans une partie d'extrémité une section de diamètre élargie (3) qui se rétrécit coniquement en direction de la section transversale de sortie (5) du canal et dans laquelle un produit d'étanchéité est tenu,
la pièce de serrage consistant en un dispositif de serrage tubulaire qui peut être glissé dans le boîtier tubulaire (1, 21) jusqu'à la section élargie (3) et est tenue dans celle-ci avec un jeu axial par un bord (8, 28) à extrémité élargie en forme de bourrelet annulaire dont le diamètre extérieur est inférieur au diamètre intérieur de la section élargie (3) mais supérieur à la section transversale de sortie (5) du canal de passage qui présente une section tubulaire (7) contiguë au bord en forme de bourrelet (8, 28), dont le diamètre extérieur correspond au diamètre de la section transversale de sortie (5) du boîtier tubulaire (1, 21) et qui à distance de sa face frontale présente une pièce d'actionnement (11) élargie à la manière d'un anneau,
dispositif de jonction dans lequel la partie terminale du dispositif de serrage tubulaire (6) avec le bord élargi (8, 28) est pourvue de plusieurs fentes longitudinales (9) traversant la surface cylindrique, fentes qui séparent des languettes élastiques à partir du dispositif de serrage tubulaire (6),
caractérisé en ce que
la pièce d'actionnement (11) est pourvue d'un côté d'une rainure circulaire (30) entourant les languettes élastiques (10), dans laquelle une extrémité du boîtier tubulaire (21) cylindrique peut être glissée et dans laquelle des éléments élastiques sont placés qui exercent un effort sur le boîtier tubulaire (21) en direction de l'expulsion.

2. Dispositif de jonction selon la revendication 1, caractérisé en ce que les languettes élastiques (10) présentent en leurs extrémités libres et/ou dans la zone du bord en forme de bourrelet annulaire (8) sur leurs côtés intérieurs en forme de coque cylindrique des projections tranchantes (18, 23).

3. Dispositif de jonction selon la revendication 2, caractérisé en ce que les projections tranchantes consistent en des pièces à la manière de nervures s'étendant en direction de la périphérie.

4. Dispositif de jonction selon les revendications 3 ou 4, caractérisé en ce que les projections tranchantes consistent en lames (18) placées dans des rainures.

5. Dispositif de jonction selon l'une des revendications 1 à 4, caractérisé en ce que le bord en forme de bourrelet (8) se rétrécit à la manière d'un cône vers son extrémité extérieure.

6. Dispositif de jonction selon l'une des revendications précédentes, caractérisé en ce que le boitier tubulaire (21) présente un prolongement tubulaire (22) central traversant la section élargie (3, 4), sur lequel le tuyau à raccorder (2) peut être glissé.

7. Dispositif de jonction selon l'une des revendications précédentes, caractérisé en ce que la section élargie (3) du canal de sortie du boîtier tubulaire (1) est contiguë, vers l'intérieur par l'intermédiaire d'une marche, à une section de canal (12) dont le diamètre correspond au diamètre du tuyau.

8. Dispositif de jonction selon l'une des revendications, caractérisé en ce qu'un joint torique (16) est tenu dans la section élargie (3) du canal de passage du boîtier tubulaire (1, 21).

9. Dispositif de jonction selon l'une des revendications précédentes, caractérisé en ce que la section de sortie de diamètre réduit fait face à la section de diamètre élargi (3, 4) du boitier tubulaire (21) et s'élargit vers l'extérieur à la manière d'un cône.

10. Dispositif de jonction selon l'une des revendications précédentes, caractérisé en ce que les deux extrémités du boîtier tubulaire (1, 21) sont pourvues de pièces de serrage tubulaires logées dans des chambres annulaires élargies.

11. Dispositif de jonction selon l'une des revendications précédentes, caractérisé en ce qu'un côté du boîtier tubulaire est pourvu d'un prolongement tubulaire (20) qui présente sur sa surface extérieure cylindrique des profilés de maintien pour un tuyau glissé sur le prolongement.

12. Dispositif de jonction selon l'une des revendications précédentes, caractérisé en qu'à l'état raccordé la paroi cylindrique extérieure (31) délimitant la rainure annulaire (30) passe par dessus le boîtier tubulaire (21) à une extrémité, à la manière d'un télescope.

13. Dispositif de jonction selon l'une des revendications précédentes, caractérisé en ce que la pièce de serrage 32 présente une longue partie mince 32'et une courte partie épaisse 32'' avec des saillies en forme de nez 32'''.

14. Dispositif de jonction détachable pour tuyaux, tuyaux souples, barres ou pièces semblables sous forme d'un boîtier tubulaire avec une pièce de serrage, dans lequel le canal de passage du boîtier tubulaire (21) présente au moins en une zone d'extrémité une section élargie dans son diamètre (3) qui se rétrécit à la manière d'un cône en direction de la section transversale de sortie (5) du canal et dans laquelle un moyen d'étanchéité est tenu, dans lequel dispositif de jonction la pièce de serrage consiste en un dispositif de serrage tubulaire (6) qui peut être glissé jusqu'à la section élargie (3) dans le boîtier tubulaire (21) et est tenu dans ladite section (3) avec un jeu axial, et dans lequel la zone d'extrémité du dispositif de serrage tubulaire (6) est pourvue de plusieurs fentes longitudinales traversant la surface cylindrique qui séparent des languettes élastiques (10) à partir du dispositif de serrage tubulaire (6),
caractérisé en ce que
dans la zone d'une pièce d'insertion (37) logée dans la section élargie (3), une pièce annulaire (28) est disposée avec des parties évasées (35) et qu'une douille d'actionnement (11') pourvue d'un canal de passage est tenue de manière à pouvoir être déplacée pour détacher les languettes (10).
